# EUROPEAN PATENT APPLICATION

(11) **EP 4 635 797 A1**
(43) Date of publication of application: **22.10.2025**
(21) Application number: 23903216.2
(22) Date of filing: 20.11.2023
(51) Int. Cl.: B60Q 1/14, B60Q 1/076

(54) **VEHICLE LAMP AND VEHICLE LAMP SYSTEM**

(30) Priority: 16.12.2022 JP 2022201510
(71) Applicant: Koito Manufacturing Co., Ltd., Tokyo 141-0001 (JP)
(72) Inventor: KATAOKA Takuya, Shizuoka-shi, Shizuoka 424-8764 (JP); SUMITANI Hiroki, Shizuoka-shi, Shizuoka 424-8764 (JP)
(74) Representative: Grünecker Patent- und Rechtsanwälte PartG mbB
(86) International application number: PCT/JP2023/041626
(87) International publication number: WO 2024/127919

(57) **Abstract**

A head lamp (10) mounted on a vehicle that travels through a corner by inclining a vehicle body in a turning direction comprises: a light distribution determination unit (15) that determines a light distribution pattern on the basis of a light spot included in an image obtained by imaging the surrounding of the vehicle and a bank angle of the vehicle body; a light source unit that has an illuminable region divided into a plurality of regions, and that can control the illumination state of each of the regions; and a lighting control unit (16) that controls the light source unit so as to form the light distribution pattern. When the illumination state of a specific one of the regions changes by a prescribed number of times or more within a prescribed time, the illumination state of the specific region is fixed.

## Description

### TECHNICAL FIELD

The present disclosure relates to a vehicle lamp and a vehicle lamp system including the vehicle lamp.

### BACKGROUND ART

Patent Literature 1 discloses a vehicle lamp system that performs adaptive driving beam (ADB) control, which dynamically controls a high-beam light distribution pattern based on surrounding conditions of a vehicle. In the vehicle lamp system, an image obtained from an imaging device that captures a region in front of a vehicle is subjected to image processing to detect a vehicle in the image, and a light distribution pattern is formed such that a light-shielding region is formed at a position where the detected vehicle is present.

### CITATION LIST

### PATENT LITERATURE

Patent Literature 1: JP2015-064964A

### SUMMARY OF INVENTION

### TECHNICAL PROBLEM

Note that even for two-wheeled vehicles, there is a demand to implement a vehicle lamp system that performs ADB control.

The two-wheeled vehicle travels around corners by tilting a vehicle body. Therefore, when a region in front of the vehicle is captured by a camera mounted on the two-wheeled vehicle, the resulting image tilts during cornering, compared to when traveling straight. Since a region to be light-shielded during ADB control shifts significantly in the image, processing is required to continuously specify the region to be light-shielded from the tilted image, which increases the processing load of the vehicle lamp system.

As such, due to the specific characteristics of two-wheeled vehicles, the image processing load increases even during cornering, making it difficult to directly apply ADB control, which is applied to four-wheeled vehicles, to two-wheeled vehicles as is. Particularly in two-wheeled vehicles, cost reduction is more often required than in four-wheeled vehicles, so ADB control technology, which is less likely to increase processing load, is required.

Therefore, the inventors of the present application have conceived a vehicle lamp system for a two-wheeled vehicle, which performs ADB control suitable for a two-wheeled vehicle with a suppressed increase in processing load, and which detects a vehicle from light spots of an image obtained from an imaging device and determines a light distribution pattern. Here, the light spots included in the image obtained from the imaging device include, in addition to light spontaneously emitted from a headlamp of an oncoming vehicle or a rear lamp of a preceding traveling vehicle, light irradiated from a headlamp of the own vehicle and reflected by a reflective object such as a road sign. Therefore, if a light distribution pattern is determined based on the light spots included in the image, there is a possibility that a so-called light flickering phenomenon may occur, in which light irradiation and non-irradiation with respect to reflective objects are repeated.

The present disclosure is directed to suppressing a light flickering phenomenon that may occur during ADB control in a vehicle lamp and a vehicle lamp system mounted on a vehicle that travels around corners by tilting a vehicle body toward a turning direction.

### SOLUTION TO PROBLEM

A vehicle lamp according to an aspect of the present disclosure is a vehicle lamp to be mounted on a vehicle configured to travel around a corner by tilting a vehicle body toward a turning direction, the vehicle lamp including: a light distribution determination unit configured to determine a light distribution pattern based on a bank angle of the vehicle body and a light spot included in an image obtained by capturing a surrounding of the vehicle, a light source unit having an illuminable region divided into a plurality of regions and configured to independently control an illumination state of each region, and a lighting control unit configured to control the light source unit to form the light distribution pattern, in which when the illumination state of a specific one of the regions changes a predetermined number of times or more within a predetermined period of time, the illumination state of the specific region is fixed.

### ADVANTAGEOUS EFFECTS OF INVENTION

According to the present disclosure, it is possible to suppress a light flickering phenomenon that may occur during ADB control in a vehicle lamp and a vehicle lamp system mounted on a vehicle that travels around corners by tilting a vehicle body toward a turning direction.

### BRIEF DESCRIPTION OF DRAWINGS

FIG. 1 is a perspective view showing an example of a motorcycle provided with a headlamp according to the present embodiment.
FIG. 2 is a block diagram of a vehicle lamp system.
FIG. 3 is a cross-sectional view showing an example of a configuration of a high-beam lamp unit.
FIG. 4 is a perspective view showing an example of a configuration of a light source unit provided in the high-beam lamp unit of FIG. 3.
FIG. 5 is a diagram for illustrating a high-beam light distribution pattern when traveling straight.
FIG. 6 is a diagram for illustrating the high-beam light distribution pattern when cornering.
FIG. 7 is a diagram showing an example of an image obtained by capturing a region in front of a vehicle.
FIG. 8 is a diagram showing an example of a binarized image generated by binarizing the image of FIG. 7.
FIG. 9 is a diagram for illustrating a high-beam light distribution pattern determined based on the binarized image of FIG. 8.
FIG. 10 is a diagram showing an example of a binarized image generated by binarizing an image obtained by capturing a region in front of a vehicle in which the high-beam light distribution pattern of FIG. 9 is formed.
FIG. 11 is a diagram for illustrating a high-beam light distribution pattern determined based on the binarized image of FIG. 10.
FIG. 12 is a diagram showing an example of on/off state information on light sources of the high-beam lamp unit.
FIG. 13 is a block diagram showing a separate example of the configuration of the vehicle lamp system.
FIG. 14 is a block diagram showing a separate example of the configuration of the vehicle lamp system.

### DESCRIPTION OF EMBODIMENTS

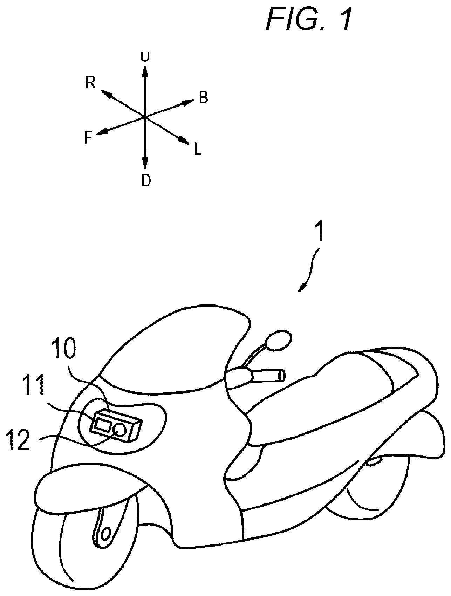

Hereinafter, embodiments of the present disclosure will be described with reference to the drawings. In the drawings, an arrow U indicates an up direction in the shown structure. An arrow D indicates a down direction in the shown structure. An arrow F indicates a front direction in the shown structure. An arrow B indicates a back direction in the shown structure. An arrow R indicates a right direction in the shown structure. An arrow L indicates a left direction in the shown structure. These directions are relative directions set with respect to a motorcycle 1 shown in FIG. 1.

FIG. 1 shows a motorcycle 1 according to the present embodiment. The motorcycle 1 travels along a corner (curve) of a road by tilting a vehicle body toward a turning direction.

As shown in FIG. 1, the motorcycle 1 includes a headlamp 10. The headlamp 10 is a lamp mounted on a front side part of the vehicle and capable of irradiating a region in front of the vehicle. The headlamp 10 includes a low-beam lamp unit 11 and a high-beam lamp unit 12. The headlamp 10 is an example of a vehicle lamp.

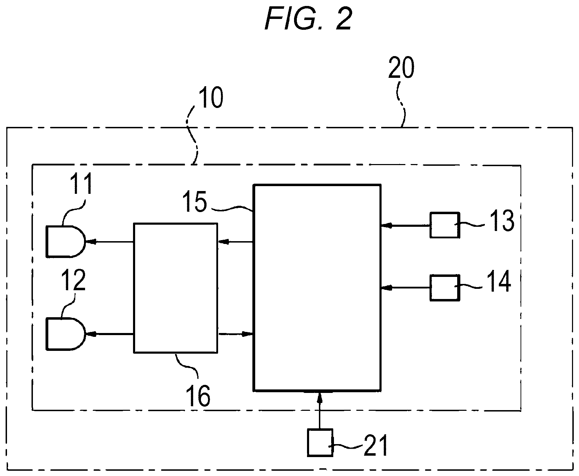

FIG. 2 is a block diagram of a vehicle lamp system 20 mounted on the motorcycle 1. As shown in FIG. 2, the vehicle lamp system 20 includes the headlamp 10 and a speed sensor 21. Note that the vehicle lamp system 20 may include a sensor for detecting a state of the vehicle, in addition to the speed sensor 21.

The headlamp 10 includes a bank angle sensor 13, an imaging device 14, a light distribution determination unit 15, and a lighting control unit 16. The bank angle sensor 13 is a sensor capable of detecting an inclination angle (so-called bank angle) when the vehicle body of the motorcycle 1 is tilted left or right with respect to a vertical line. The bank angle sensor 13 is configured by, for example, a gyro sensor.

The imaging device 14 is configured to capture a region in front of the vehicle. The imaging device 14 is sensitive to the visible light region, and captures light irradiated from the headlamp 10 and reflected by an object ahead of the vehicle and light spontaneously emitted from an object ahead of the vehicle. The imaging device 14 is composed of, for example, a camera.

The light distribution determination unit 15 is configured to determine a light distribution pattern of the headlamp 10 based on a bank angle of the vehicle body and light spots included in an image obtained by capturing a region in front of the vehicle. Specifically, the bank angle sensor 13, the imaging device 14, and the speed sensor 21 are connected to the light distribution determination unit 15. The light distribution determination unit 15 determines a light distribution pattern based on each piece of information output from the bank angle sensor 13, the imaging device 14, and the speed sensor 21. The light distribution determination unit 15 determines and updates the light distribution pattern at predetermined intervals. For example, the light distribution determination unit 15 determines and updates the light distribution pattern 60 times per second. The light distribution determination unit 15 may be implemented by a general-purpose memory and a general-purpose microprocessor configured to operate in cooperation with the general-purpose memory. Examples of the general-purpose microprocessor may include a CPU, an MPU, and a GPU.

The lighting control unit 16 controls an operation of the headlamp 10 to form a light distribution pattern determined by the light distribution determination unit 15. Specifically, the lighting control unit 16 is connected to the light distribution determination unit 15. Additionally, the lighting control unit 16 is connected to the low-beam lamp unit 11 and the high-beam lamp unit 12. The lighting control unit 16 controls operations of the low-beam lamp unit 11 and the high-beam lamp unit 12 based on the light distribution pattern output by the light distribution determination unit 15.

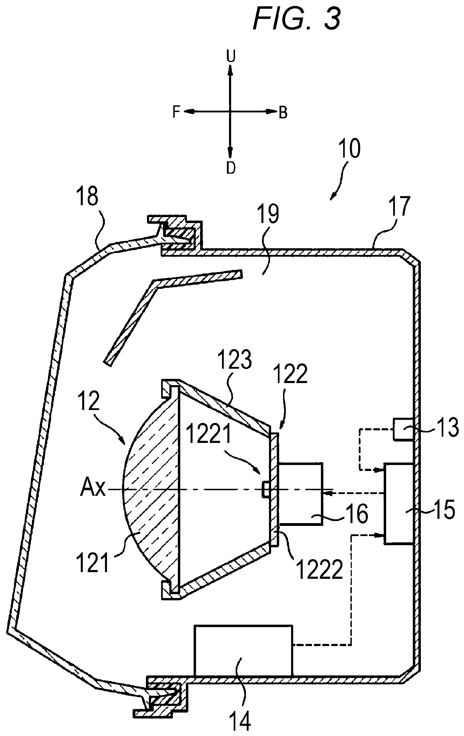

FIG. 3 is a vertical cross-sectional view showing a schematic configuration of the headlamp 10. As shown in FIG. 3, the headlamp 10 includes a lamp body 17 and a transparent cover 18. The lamp body 17 has an opening portion on a front side of the vehicle. The transparent cover 18 is attached to cover the opening portion of the lamp body 17. The lamp body 17 and the transparent cover 18 form a lamp chamber 19.

Inside the lamp chamber 19, the low-beam lamp unit 11, the high-beam lamp unit 12, the bank angle sensor 13, the imaging device 14, the light distribution determination unit 15, and the lighting control unit 16 are accommodated. Note that although the low-beam lamp unit 11 is not shown in FIG. 3, it is accommodated within the lamp chamber 19 of the headlamp 10, similarly to the high-beam lamp unit 12.

The high-beam lamp unit 12 is a so-called projector-type lamp and includes a projection lens 121, a light source unit 122, and a holder 123. The holder 123 is attached to the lamp body 17 via a support member (not shown).

The projection lens 121 is arranged on an optical axis Ax extending in a front-rear direction of the vehicle. The projection lens 121 is a plano-convex aspherical lens with a convex front surface and a flat rear surface. A peripheral edge portion of the projection lens 121 is held on a front end side of the holder 123. The projection lens 121 irradiates light from the light source unit 122 toward a region in front of the lamp, thereby forming a predetermined light distribution pattern.

The light source unit 122 is held on a rear end side of the holder 123. The light source unit 122 includes a light source 1221 and a support plate 1222. The light source 1221 is fixed to a front surface of the support plate 1222. The light source 1221 is arranged to face forward in the direction of the optical axis Ax. The light source 1221 is composed of, for example, a semiconductor light source such as a light-emitting diode (LED), an EL element, or an LD element.

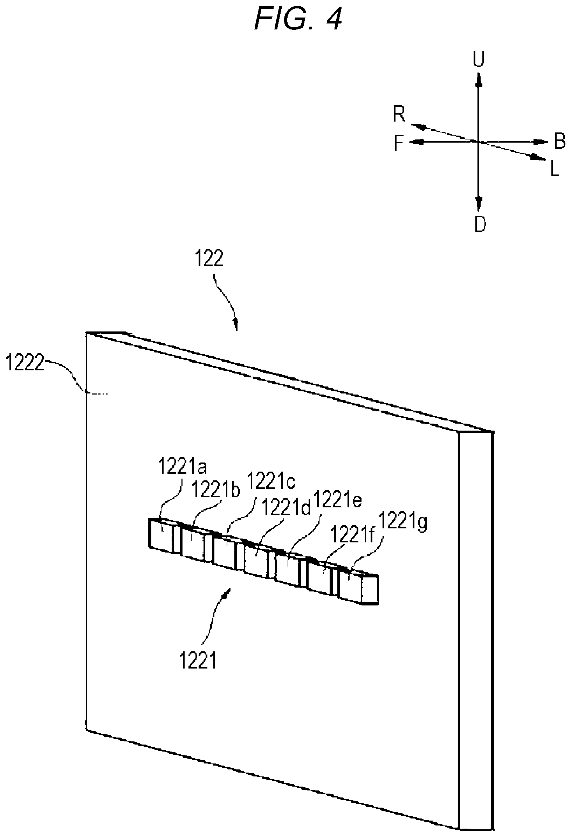

FIG. 4 is a perspective view showing a schematic structure of the light source unit 122. As shown in FIG. 4, the light source unit 122 includes a plurality of light sources 1221. For example, the light source unit 122 includes light sources 1221a to 1221g arranged in parallel in a left-right direction (in a direction orthogonal to the optical axis Ax) in 7 columns and 1 row. The light sources 1221a to 1221g are configured as an LED array. Note that the number or arrangement of the light sources 1221 constituting the LED array is not limited to the configuration of this example.

Each light source 1221 is electrically connected to the lighting control unit 16. The light source 1221 is individually driven and controlled by the lighting control unit 16. The lighting control unit 16 includes, for example, an LDM (LED Driving Modulator) that controls drive current supplied to the light source 1221.

Each light source 1221 is associated with each of a plurality of regions forming an illuminable region in front of the vehicle, and light from each light source 1221 is irradiated to the corresponding individual region. By individually driving and controlling the light source 1221 by the lighting control unit 16, an illumination state of each region in the illuminable region can be independently controlled.

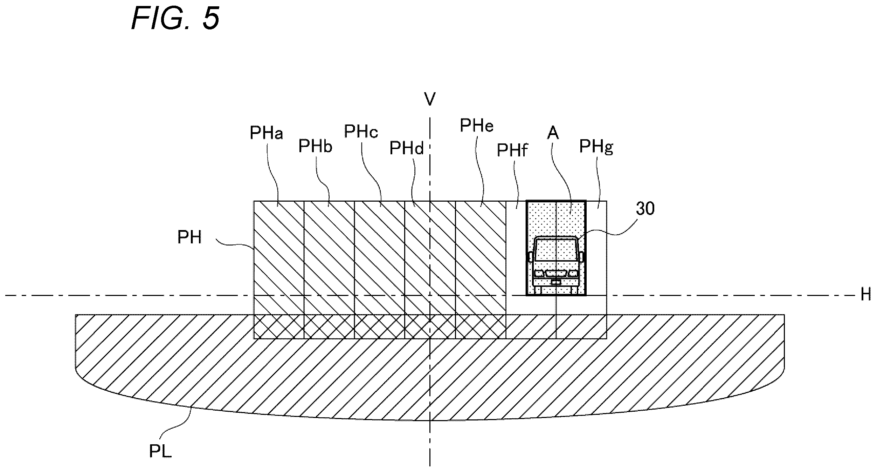

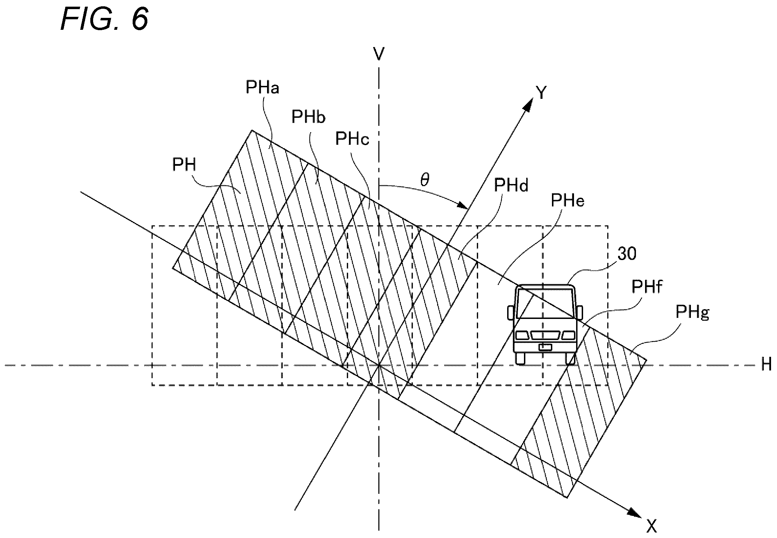

FIGS. 5 and 6 show a light distribution pattern formed by the headlamp 10 mounted on the motorcycle 1. In FIGS. 5 and 6, H-H represents a horizontal direction, and V-V represents a vertical direction. Note that, in FIG. 6, only a high-beam light distribution pattern PH is shown.

FIG. 5 shows a light distribution pattern that is formed ahead of the vehicle when the motorcycle 1 is in a straight-traveling state, that is, when the motorcycle 1 is traveling with its vehicle body oriented perpendicular to a road surface. The case where the vehicle body of the motorcycle 1 is in the straight-traveling state includes, for example, a case where the vehicle body is tilted within ±10 degrees with respect to a vertical state of the vehicle body.

The light distribution pattern is formed on a virtual vertical screen placed at a predetermined position in front of the vehicle, for example, at a position located 100 meters ahead of the vehicle. In this example, the light distribution pattern includes a high-beam light distribution pattern PH and a low-beam light distribution pattern PL. The high-beam light distribution pattern PH is a light distribution pattern formed by the high-beam lamp unit 12. The low-beam light distribution pattern PL is a light distribution pattern formed by the low-beam lamp unit 11.

The high-beam light distribution pattern PH is a light distribution pattern formed by a plurality of vertically elongated partial patterns PHa to PHg aligned side by side in a horizontal direction. Each of the partial patterns PHa to PHg is formed by light emitted from each of the light sources 1221a to 1221g. The partial pattern PHa is formed by the light source 1221a. The partial pattern PHb is formed by the light source 1221b. The partial pattern PHc is formed by the light source 1221c. The partial pattern PHd is formed by the light source 1221d. The partial pattern PHe is formed by the light source 1221e. The partial pattern PHf is formed by the light source 1221f. The partial pattern PHg is formed by the light source 1221g.

The high-beam light distribution pattern PH is formed, in the ADB (Adaptive Driving Beam) mode, as a high-beam light distribution pattern of different aspects in response to the situation of the own vehicle or a vehicle traveling ahead (an oncoming vehicle or a preceding traveling vehicle), by a combination of formation and non-formation of the respective partial patterns PHa to PHg.

Specifically, the light distribution determination unit 15 detects the situation of the own vehicle based on the bank angle of the vehicle body detected by the bank angle sensor 13. In addition, the light distribution determination unit 15 detects the situation of the own vehicle, including whether the own vehicle is traveling or stopped, based on the vehicle speed detected by the speed sensor 21. In addition, the light distribution determination unit 15 detects the situation of the preceding vehicle, including the presence or absence and position of the preceding vehicle, based on the light spots included in the image acquired by the imaging device 14. Then, the light distribution determination unit 15 defines a light-shielding range such that the preceding vehicle is not irradiated with light, based on the situation of the own vehicle and the situation of the preceding vehicle. The light distribution determination unit 15 determines the high-beam light distribution pattern PH such that light is not irradiated onto the light-shielding range.

For example, as shown in FIGS. 5 and 6, when an oncoming vehicle 30 is traveling ahead and on the right side of the motorcycle 1, the light distribution determination unit 15 defines a light-shielding range A (FIG. 5) such that light is not irradiated onto the oncoming vehicle 30. Then, the light distribution determination unit 15 determines the high-beam light distribution pattern PH in which a part of the partial patterns is set as a non-irradiation region so that light is not irradiated onto the light-shielding range A.

As shown in FIG. 5, when the motorcycle 1 is traveling with its vehicle body oriented perpendicular to the road surface, the light distribution determination unit 15 determines a high-beam light distribution pattern PH in which the partial patterns PHf and PHg corresponding to the region where the oncoming vehicle 30 is present are set as non-irradiation regions. Note that the "non-irradiation region" may also include a region where light is irradiated at a low luminance to the extent that it does not cause glare to a driver of an oncoming vehicle.

On the other hand, as shown in FIG. 6, when the vehicle body of the motorcycle 1 is in a cornering state, for example, when the motorcycle is traveling with the vehicle body tilted to the right (bank angle θ) with respect to the road surface in order to travel rightward around a corner, the light distribution determination unit 15 determines a high-beam light distribution pattern PH in which the partial patterns PHe and PHf corresponding to the region where the oncoming vehicle 30 is present are set as non-irradiation regions.

The lighting control unit 16 individually controls an on/off state of each light source 1221 based on the high-beam light distribution pattern PH determined by the light distribution determination unit 15. Specifically, the lighting control unit 16 sets the light source 1221 corresponding to a partial pattern set as an irradiation region to an on state, and sets the light source 1221 corresponding to a partial pattern set as a non-irradiation region to an off state or a low-illuminance state. For example, when the dimming method of the light source is an analog dimming method, the lighting control unit 16 adjusts a direct current level of the drive current flowing through the light source 1221. For example, when the dimming method of the light source is a pulse width modulation (PWM) dimming method, the lighting control unit 16 switches the current flowing through the light source 1221 and adjusts a ratio of an on period, thereby adjusting an average level of the drive current.

For example, in the case of the high-beam light distribution pattern PH shown in FIG. 5, the lighting control unit 16 turns off the light sources 1221f and 1221g corresponding to the partial patterns PHf and PHg, and turns on the remaining light sources 1221a to 1221e. In addition, for example, in the case of the high-beam light distribution pattern PH shown in FIG. 6, the lighting control unit 16 turns off the light sources 1221e and 1221f corresponding to the partial patterns PHe and PHf, and turns on the remaining light sources 1221a to 1221d and 1221g.

In the ADB control of the motorcycle 1, since the motorcycle 1 travels around a corner while tilting its vehicle body, an image acquired by the imaging device 14 during cornering is tilted as compared to when the motorcycle is traveling straight. Since a region to be light-shielded during ADB control shifts significantly in the image, processing is required to continuously specify the region to be light-shielded from the tilted image, which increases the processing load of the vehicle lamp system.

However, since the light distribution determination unit 15 of the present embodiment detects a preceding vehicle based on the light spots included in the image as described above, it is possible to perform ADB control suitable for a motorcycle with a suppressed increase in processing load.

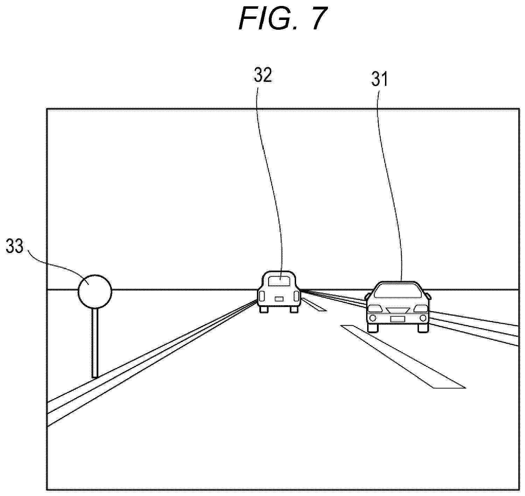

Next, a method for detecting a light spot included in an image and a method for determining a light distribution pattern based on the detected light spot by the light distribution determination unit 15 will be described in more detail with reference to FIGS. 7 to 11.

First, the light distribution determination unit 15 determines a high-beam light distribution pattern PH1 in which the partial patterns PHa to PHg are set as irradiation regions, so as to illuminate an entire illuminable region ahead of the vehicle. The lighting control unit 16 controls the light source unit 122 so as to turn on the light sources 1221a to 1221g based on the determined high-beam light distribution pattern PH1.

Subsequently, the light distribution determination unit 15 detects a preceding vehicle based on an image of the region ahead of the vehicle formed with the high-beam light distribution pattern PH1 and captured by the imaging device 14, in order to update the high-beam light distribution pattern PH. Specifically, the light distribution determination unit 15 generates a binarized image in which a luminance value of each pixel in the image is binarized using a predetermined luminance threshold value. Then, the light distribution determination unit 15 detects a predetermined high-luminance pixel included in the binarized image, as a light spot. That is, the light spot is a cluster of one or more high-luminance pixels. The threshold value is appropriately set, for example, to a luminance value at which light from a headlamp of an oncoming vehicle or a rear lamp of a preceding traveling vehicle is detected.

For example, FIG. 7 shows an image captured by the imaging device 14. As shown in FIG. 7, an oncoming vehicle 31, a preceding traveling vehicle 32, and a road sign 33 are present in a region ahead of the vehicle. The headlamps of the oncoming vehicle 31 and the rear lamps of the preceding traveling vehicle 32 are self-luminous objects and are captured as high-luminance bodies. In addition, the road sign 33 is a reflective object and is captured as a high-luminance object. Note that the road sign 33 is an example of a reflective object. In addition to the road sign, the reflective object includes a delineator, a signboard, and other objects having retroreflective surfaces in portions that are visible from the own vehicle.

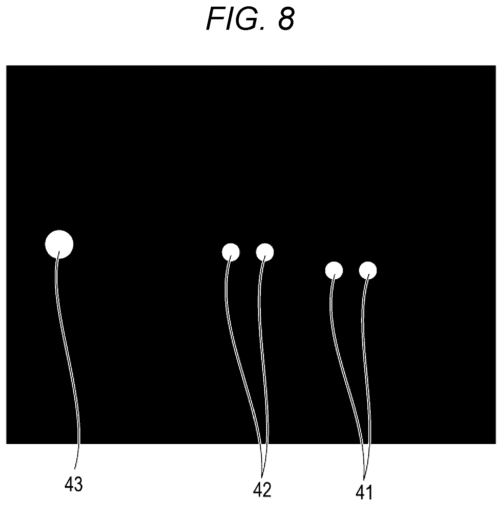

FIG. 8 shows a binarized image generated from FIG. 7. In the binarized image shown in FIG. 8, in addition to high-luminance pixels 41 corresponding to the headlamps of the oncoming vehicle 31, and high-luminance pixels 42 corresponding to the rear lamps of the preceding traveling vehicle 32, a high-luminance pixel 43 corresponding to the road sign 33 is detected as a light spot.

The light distribution determination unit 15 defines, as light-shielding ranges, regions ahead of the vehicle overlapping with the specified high-luminance pixels so that light to be irradiated onto the regions ahead of the vehicle overlapping with the high-luminance pixels detected as light spots is not irradiated, and determines a high-beam light distribution pattern PH2 such that the light-shielding ranges are not irradiated.

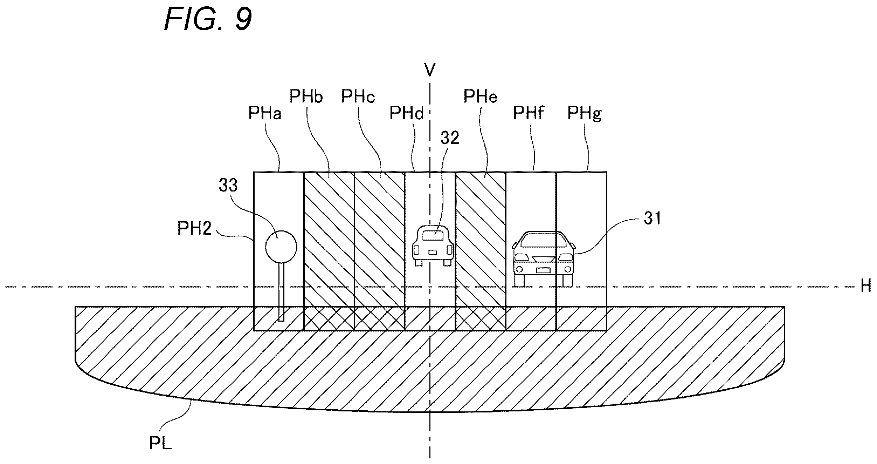

Specifically, as shown in FIG. 9, a high-beam light distribution pattern PH2 is determined in which the partial patterns PHa, PHd, PHf, and PHg corresponding to regions where the oncoming vehicle 31, the preceding traveling vehicle 32, and the road marking 33 are present are set as non-irradiation regions. The lighting control unit 16 turns on the light sources 1221b, 1221c, and 1221e and turns off the light sources 1221a, 1221d, 1221f, and 1221g, based on the determined high-beam light distribution pattern PH2.

Subsequently, the light distribution determination unit 15 detects a preceding vehicle based on an image of the region ahead of the vehicle formed with the high-beam light distribution pattern PH2 and captured by the imaging device 14, in order to update the high-beam light distribution pattern PH.

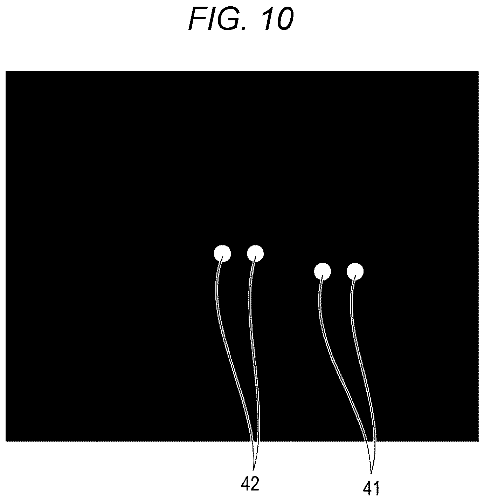

For example, FIG. 10 shows a binarized image generated by binarizing an image obtained by capturing a region ahead of the vehicle formed with the high-beam light distribution pattern PH2 shown in FIG. 9. In the binarized image shown in FIG. 10, the high-luminance pixels 41 corresponding to the headlamps of the oncoming vehicle 31 and the high-luminance pixels 42 corresponding to the rear lamps of the preceding traveling vehicle 32 are detected as light spots.

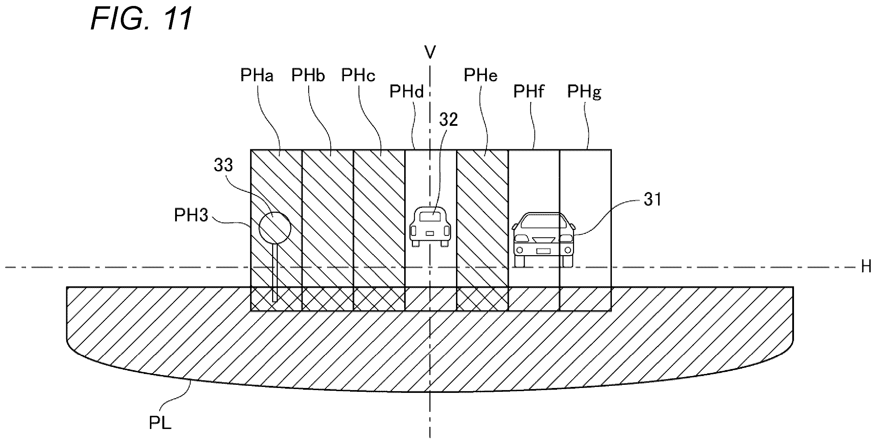

Then, the light distribution determination unit 15 defines, as light-shielding ranges, regions ahead of the vehicle overlapping with the high-luminance pixels detected as light spots, and determines a high-beam light distribution pattern PH3 such that the light-shielding ranges are not irradiated. Specifically, as shown in FIG. 11, a high-beam light distribution pattern PH3 is determined in which the partial patterns PHd, PHf, and PHg corresponding to regions where the oncoming vehicle 31 and the front traveling vehicle 32 are present are set as non-irradiation regions. The lighting control unit 16 turns on the light sources 1221a, 1221b, 1221c, and 1221e and turns off the light sources 1221d, 1221f, and 1221g, based on the determined high-beam light distribution pattern PH3.

In this way, when a preceding vehicle is detected based on a light spot included in an image obtained by capturing a region in front of the vehicle, not only light spontaneously emitted from the headlamps of the oncoming vehicle 31 and the rear lamps of the preceding traveling vehicle 32 but also light irradiated from the headlamp of the own vehicle 10 and reflected by a reflective object such as a road sign 33 is detected as a light spot. Therefore, when the high-beam light distribution pattern PH is formed by defining the light-shielding ranges based on the light spots included in the image, the light-shielding range is also defined for the position where the reflective object is present, so light is not irradiated onto the reflective object. Thereby, no light spot is detected from the pixel corresponding to the reflective object in an image acquired thereafter, so light is irradiated onto the reflective object again. As a result, light irradiation and non-irradiation with respect to the reflective object are repeated, resulting in a light flickering phenomenon, which may be perceived as light flickering by the driver or detected as such by the camera.

Therefore, the headlamp 10 according to the present embodiment is configured such that, when an illumination state of a specific region in an illuminable region in front of the vehicle changes a predetermined number of times or more within a predetermined period of time, the illumination state of the specific region is fixed. Specifically, the light distribution determination unit 15 controls the lighting control unit 16 so as to fix a state of the light source unit 122 illuminating a specific region when the state of the light source unit 122 illuminating the specific region changes a predetermined number of times or more within a predetermined period of time.

For example, as shown in FIG. 2, the lighting control unit 16 is configured to output a state of the light source unit 122 of the high-beam lamp unit 12 to the light distribution determination unit 15. Each time the light distribution pattern is updated by the light distribution determination unit 15, the lighting control unit 16 controls the operation of the light source unit 122 of the high-beam lamp unit 12, and also outputs the state of the light source unit 122 to the light distribution determination unit 15.

The light distribution determination unit 15, based on the state of the light source unit 122 output from the lighting control unit 16, controls the lighting control unit 16 so as to fix the state of the light source unit 122 that is changing, when the state of the light source unit 122 has changed at least twice in succession.

In this example, each time the light distribution pattern is updated, the lighting control unit 16 controls the on/off state of each light source 1221 of the light source unit 122, and also outputs the on/off state of each light source 1221 to the light distribution determination unit 15. The light distribution determination unit 15 controls the lighting control unit 16 so as to fix the on/off state of the light source 1221 whose on/off state output from the lighting control unit 16 changes at least twice in succession. Here, when the light source 1221 changes from the on state to the off state, it is counted as one change in the on/off state, or when the light source 1221 changes from the off state to the on state, it is counted as one change in the on/off state.

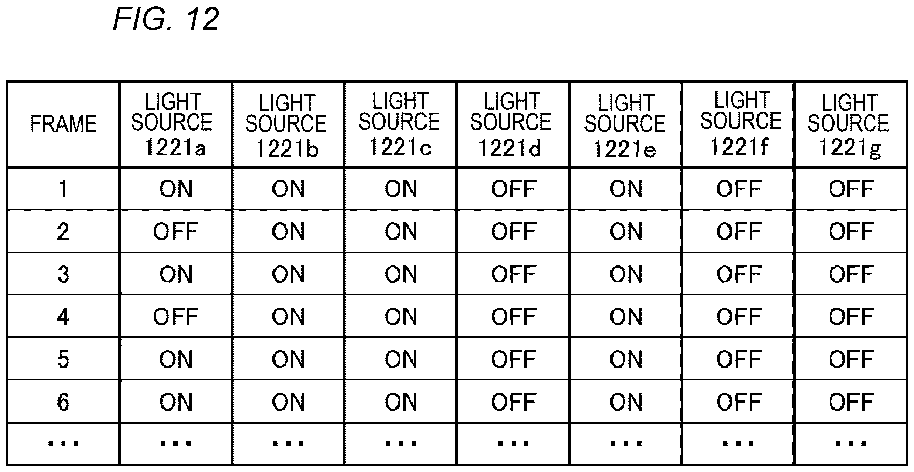

FIG. 12 shows on/off state data of each of the light sources 1221a to 1221g, which is output from the lighting control unit 16 at a predetermined reception interval (frame rate) and acquired by the light distribution determination unit 15. In FIG. 12, ON indicates that the light source 1221 is in the on state. "OFF" indicates that the light source 1221 is in the off state.

The light distribution determination unit 15 determines whether the on/off state of the light source 1221 changes three times in succession from ON to OFF, from OFF to ON, and from ON to OFF over, for example, four frames. The period of time during which data for four frames is acquired is an example of a predetermined period of time during which the state of the light source unit changes. The three times is an example of a predetermined number of times the state of the light source unit changes.

Specifically, the light distribution determination unit 15 expresses the on/off state of each light source 1221 over four frames using a one-byte variable, stores it in a memory as a bit flag, and determines that the on/off state of the light source 1221 corresponding to the bit flag has continuously changed when the stored bit flag indicates a specific value. The specific value is appropriately set, for example, to a value indicated by a bit flag that is output when the on/off state of the light source 1221 has continuously changed.

Note that the determination as to whether the on/off state has changed may be performed every four frames (e.g., the determination is made over frames 1 to 4, over frames 5 to 8, and the like). Alternatively, the determination as to whether the on/off state has changed may be performed every frame over the most recent four frames (e.g., the determination is made over frames 1 to 4, over frames 2 to 5, and the like).

In this example, as shown in FIG. 12, the on/off state of the light source 1221a changes to ON in the first frame, to OFF in the second frame, to ON in the third frame, and to OFF in the fourth frame. The on/off states of the light sources 1221b and 1221c are ON from the first frame to the fourth frame. The on/off states of the light sources 1221d, 1221e, and 1221f are OFF from the first frame to the fourth frame.

Accordingly, the light distribution determination unit 15 determines that the on/off state of the light source 1221a has changed three times in succession from ON to OFF, OFF to ON, and ON to OFF. The light distribution determination unit 15 controls the lighting control unit 16 so as to fix the on/off state of the light source 1221a. Note that, in this example, the region that is illuminated by light irradiated by the light source 1221a is an example of a specific region.

For example, when the light source 1221a transitions from an off state to an on state, the light distribution determination unit 15 outputs control information to the lighting control unit 16 so as to temporarily extend a transition time (gradual change time) for increasing the luminance of the light source 1221a. The lighting control unit 16, based on the control information, adjusts, for example, an amount of increase per unit time of the drive current supplied to the light source 1221a, and gradually increases the luminance of the light source 1221a. Therefore, over multiple frames from the fifth frame onward, the luminance of light source 1221a is controlled to gradually increase while the on/off state of the light source 1221a is fixed in the ON state.

Alternatively, the light distribution determination unit 15 may be configured to output control information to the lighting control unit 16 so that the on/off state of the light source 1221a is fixed in the OFF state, which is the same as in the fourth frame, over a plurality of frames from the fifth frame onward. For example, the light distribution determination unit 15 may be configured to maintain the fixed state over 30 frames from the time it is determined that the on/off state has changed three times.

As described above, according to the headlamp 10 of the present embodiment, even when a light-shielding range is defined based on a light spot included in the image, the illumination state of a specific region in which the illumination state changes a predetermined number of times or more within a predetermined period of time is fixed. As a result, the light flickering phenomenon caused by repeated light irradiation and non-irradiation with respect to a reflective object can be suppressed.

In addition, in the present embodiment, the imaging device 14 is included in the headlamp 10. Specifically, the imaging device 14 is arranged within the lamp chamber 19. As a result, processing such as calibration between the imaging device 14 and the light distribution determination unit 15 can be omitted. For example, since the vehicle body of the motorcycle 1 is banked, if the imaging device and the image processing unit are arranged apart from each other, complex image processing such as rotating a captured image is required during image processing. In addition, if the imaging device and the image processing unit are arranged apart from each other, parallax correction may be required, or the position of the light-shielding region of the irradiation light from the lamp with respect to the captured image may be misaligned. However, in the present embodiment, the imaging device 14 is arranged within the same lamp chamber 19 as the light distribution determination unit 15. Accordingly, the imaging device 14 and the light distribution determination unit 15 are configured to be banked together, so that complex image processing can be omitted. In addition, since the imaging device 14 is arranged near the light distribution determination unit 15, parallax correction becomes unnecessary, and the misalignment of the light-shielding range position with respect to the captured image can be suppressed.

Note that in the present embodiment, when the on/off state of the light source 1221 changes three times in succession over four frames, light flickering is detected. However, for example, when the on/off state of the light source 1221 changes twice in succession over three frames, light flickering may be detected. Alternatively, when the on/off state of the light source 1221 changes in succession over five or more frames, light flickering may be detected.

Although the embodiment of the present invention has been described, it should be noted that the technical scope of the present Invention should not be construed as being limited by the description of the present embodiment. It is understood by one skilled in the art that the present embodiment is just an example and the embodiment can be variously changed within the scope of the invention described in the claims. The technical scope of the present invention should be determined based on the scope of the invention described in the claims and the equivalent scope thereof.

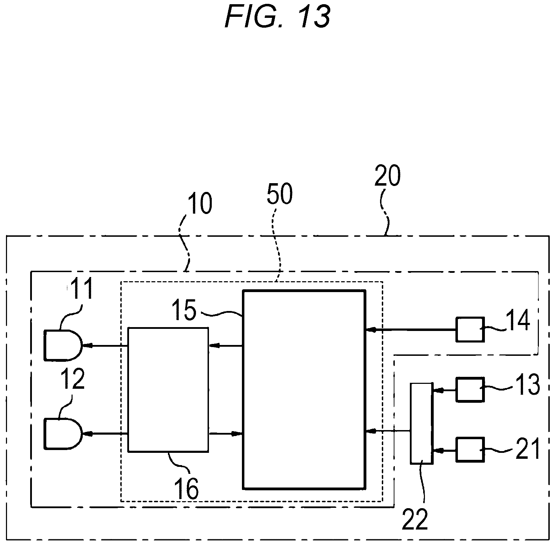

In the above embodiment, the bank angle sensor 13 is included in the headlamp 10. However, as shown in FIG. 13, for example, the bank angle sensor 13 may be configured as a separate component from the headlamp 10. That is, the vehicle lamp system 20 may be configured to have the headlamp 10, the bank angle sensor 13, and the speed sensor 21. The bank angle sensor 13 and the speed sensor 21 are connected to the headlamp 10 via the vehicle control unit 22, as shown in FIG. 13, for example. The vehicle control unit 22 is configured to be able to communicate with the light distribution determination unit 15, for example, via controller region network (CAN) communication or local interconnect network (LIN) communication.

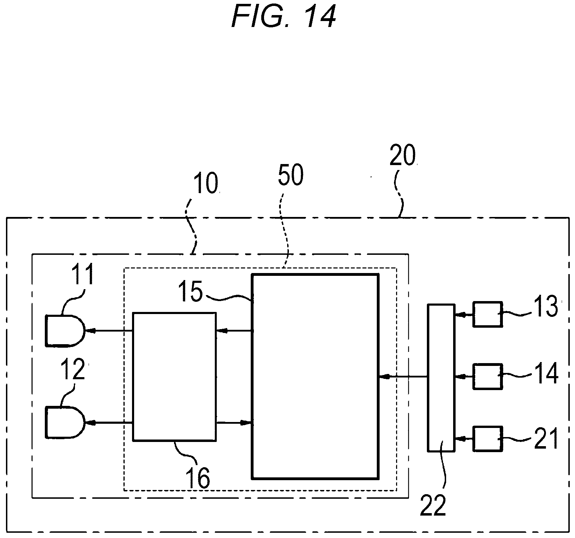

In the above embodiment, the imaging device 14 is included in the headlamp 10. However, as shown in FIG. 14, for example, the imaging device 14 may be configured as a separate component from the headlamp 10, together with the bank angle sensor 13. That is, the vehicle lamp system 20 may be configured to have the headlamp 10, the bank angle sensor 13, the imaging device 14, and the speed sensor 21. The bank angle sensor 13, the imaging device 14, and the speed sensor 21 are connected to the headlamp 10 via the vehicle control unit 22, as shown in FIG. 14, for example. The vehicle control unit 22 is configured to be able to communicate with the light distribution determination unit 15, for example, via CAN communication or LIN communication.

Note that, even when the imaging device 14 is not included in the headlamp 10, if the imaging device 14 is arranged near the headlamp 10, the imaging device 14 and the light distribution determination unit 15 can be configured to be banked together, thereby allowing omission of complex image processing. In addition, if the imaging device 14 is arranged near the headlamp 10, the imaging device 14 can be arranged close to the light distribution determination unit 15, thereby making parallax correction unnecessary or suppressing misalignment of the light-shielding range position with respect to the captured image.

In the above embodiment, the light distribution determination unit 15 and the lighting control unit 16 are configured as separate components. However, as shown in FIG. 13 or FIG. 14, for example, the light distribution determination unit 15 and the lighting control unit 16 may be integrated and configured as one device 50. Specifically, in the device 50, the light distribution determination unit 15 and the lighting control unit 16 are mounted on the same substrate. In this case, compared to a configuration in which the light distribution determination unit 15 and the lighting control unit 16 are mounted on separate substrates, wiring and communication between the substrates become unnecessary, making it possible to suppress communication delay and to reduce the mounting space.

In the above embodiment, the light source unit 122 includes the LED array composed of the plurality of light sources 1221a to 1221g, and the lighting control unit 16 is configured to individually drive and control the light sources 1221a to 1221g. However, the light source unit 122 may be configured by a pattern forming device of a scanning optical type that scans light from a light source, such as a blade scan-type device, a pattern forming device of a matrix type, such as a digital mirror device (DMD) or a liquid crystal device, or the like. In this case, the light distribution determination unit 15 is configured to control the lighting control unit 16 so as to fix, as a state of the light source unit, an on state of a light source of the blade scan-type device, an orientation of a reflecting mirror of the DMD, a state of a liquid crystal element of the liquid crystal device, or the like. More specifically, the light distribution determination unit 15 controls the lighting control unit 16 so as to fix the on/off and lighting intensity during a certain time zone within one scanning cycle of the light source of the blade scan-type device, the orientation or reflection angle of each reflecting mirror of the DMD, the state of each liquid crystal element of the liquid crystal device, or the like.

In the above embodiment, the light distribution determination unit 15 fixes the state of the light source unit 122 when the state of the light source unit 122 of the high-beam lamp unit 12 changes a predetermined number of times or more within a predetermined period of time. However, for example, in the case where the headlamp 10 includes an ADB-controllable cornering lamp, the light distribution determination unit 15 may be configured to fix the state of the light source unit when the state of the light source unit of the cornering lamp changes a predetermined number of times or more within a predetermined period of time.

In the above embodiment, the motorcycle 1 has been described as an example of a vehicle that travels around a corner by tilting the vehicle body toward a turning direction. However, the number of wheels of the vehicle is not limited. For example, the vehicle that travels around a corner by tilting the vehicle body toward a turning direction may also include a motorized three-wheeled vehicle.

The present application is based on Japanese Patent Application No. 2022-201510 filed on December 16, 2022, the contents of which are incorporated herein by reference.

## Claims

1. A vehicle lamp to be mounted on a vehicle configured to travel around a corner by tilting a vehicle body toward a turning direction, the vehicle lamp comprising:
a light distribution determination unit configured to determine a light distribution pattern based on a bank angle of the vehicle body and a light spot included in an image obtained by capturing a surrounding of the vehicle;
a light source unit having an illuminable region divided into a plurality of regions and configured to independently control an illumination state of each region; and
a lighting control unit configured to control the light source unit to form the light distribution pattern,
wherein when the illumination state of a specific one of the regions changes a predetermined number of times or more within a predetermined period of time, the illumination state of the specific region is fixed.

2. The vehicle lamp according to claim 1, wherein the light distribution determination unit controls the lighting control unit to fix a state of the light source unit illuminating the specific region when the state of the light source unit illuminating the specific region changes a predetermined number of times or more within a predetermined period of time.

3. The vehicle lamp according to claim 1 or 2, wherein the lighting control unit outputs a state of the light source unit to the light distribution determination unit.

4. The vehicle lamp according to claim 3, wherein the light distribution determination unit controls the lighting control unit to fix the state of the light source unit that is changing, when the state of the light source unit output from the lighting control unit changes at least twice in succession.

5. The vehicle lamp according to claim 1 or 2, wherein
the light source unit comprises a plurality of semiconductor light sources configured to illuminate the respective regions, and
the lighting control unit is configured to individually drive and control the plurality of semiconductor light sources.

6. The vehicle lamp according to claim 5, wherein
the lighting control unit outputs an on/off state of each of the semiconductor light sources to the light distribution determination unit, and
the light distribution determination unit controls the lighting control unit to fix the on/off state of the semiconductor light source whose on/off state output from the lighting control unit changes at least twice in succession.

7. The vehicle lamp according to claim 1 or 2, wherein the light distribution determination unit and the lighting control unit are mounted on the same substrate.

8. The vehicle lamp according to claim 1 or 2, comprising an imaging device configured to capture the surrounding of the vehicle.

9. A vehicle lamp system comprising:
an imaging device configured to capture a surrounding of a vehicle; and
the vehicle lamp according to claim 1 or 2.
